# EUROPEAN PATENT SPECIFICATION

(11) **EP 3 095 619 B1**
(45) Date of publication and mention of the grant of the patent: **06.06.2018**
(21) Application number: 15736946.3
(22) Date of filing: 14.01.2015
(51) Int. Cl.: B60C 11/03, B60C 11/12, B60C 11/16

(54) **STUDDABLE TIRE**
MIT SPIKES BESTÜCKBARER REIFEN
PNEU À CLOUTER

(30) Priority: 16.01.2014 JP 2014005942
(43) Date of publication of application: 23.11.2016
(73) Proprietor: Bridgestone Corporation, Tokyo 104-8340 (JP)
(72) Inventor: ITO, Tomoaki, Kodaira-shi Tokyo 187-8531 (JP); SAWADA, Hiroki, Kodaira-shi Tokyo 187-8531 (JP)
(74) Representative: Oxley, Robin John George
(86) International application number: PCT/JP2015/050837
(87) International publication number: WO 2015/108081

(56) References cited:
- EP-A1- 2 402 178
- WO-A1-2009/147046
- WO-A1-2011/057834
- WO-A1-2014/123181
- JP-A- H0 345 403
- JP-A- H0 345 403
- JP-A- 2011 521 844

## Description

### Technical Field

The present invention relates to a studdable tire in which plural stud attachment portions for embedding spike pins are formed in a tire tread.

### Background Art

Conventional tires for use on ice are known in which recessed portions are provided at the periphery of stud attachment portions, and powdered ice scraped up by spike pins while traveling on an icy road surface is accumulated in the recessed portions, thereby enabling powdered ice to be suppressed from adhering to the spike pins (Japanese National-Phase Publication No. 2011-521845, for example).

Reference is also made to WO2009/147046, which discloses a tire according to the preamble of Claim 1, and also to EP-A-2402178 and JP 3-45403.

### SUMMARY OF INVENTION

### Technical Problem

However, in the tire used on ice described in Patent Document 1, discharge of powdered ice from the recessed portions is only performed by rotation of the tire. Thus, in cases in which a rotation speed of the tire is insufficient, it is difficult to discharge powdered ice from the recessed portions, and therefore difficult to suppress powdered ice from adhering to the spike pins.

In consideration of the above circumstances, an object of the present invention is to obtain a studdable tire capable of suppressing powdered ice occurring while driving on an icy road surface from adhering to spike pins, and of securing a high steering stability performance.

### Solution to Problem

A studdable tire according to a first aspect of the present invention includes: plural land portions that are provided at a tread and that are partitioned by plural circumferential direction grooves extending along a tire circumferential direction and plural intersecting grooves that intersect the circumferential direction grooves; a stud attachment portion that is formed at the land portions; and a communicating portion that is provided at the land portions among the plural land portions at which the stud attachment portion is formed, and that has one end portion terminating at a position separated from the stud attachment portion and another end portion in communication with the intersecting grooves, wherein a width of the communicating portion in the land portions further toward a tire width direction inner side than a shoulder portion of the tread is narrower than a width of the communicating portion in the land portions at the shoulder portion.

### Advantageous Effects of Invention

As explained above, the studdable tire according to the present invention an excellent advantageous effects of enabling powdered ice occurring while driving on an icy road surface to be suppressed from adhering to spike pins, and of securing a high steering stability performance.

### BRIEF DESCRIPTION OF DRAWINGS

Fig. 1 is an opened-out view of a tread of a studdable tire according to an exemplary embodiment.
Fig. 2A is a cross-section illustrating a configuration at the periphery of a spike pin of a studdable tire according to the present exemplary embodiment.
Fig. 2B is a plan view illustrating a configuration at the periphery of a spike pin of a studdable tire according to the present exemplary embodiment.
Fig. 3A is an enlarged plan view illustrating a configuration of communicating grooves provided to a central block of a studdable tire according to the present exemplary embodiment.
Fig. 3B is an enlarged plan view illustrating a configuration of communicating grooves provided to a shoulder block of a studdable tire according to the present exemplary embodiment.

### DESCRIPTION OF EMBODIMENTS

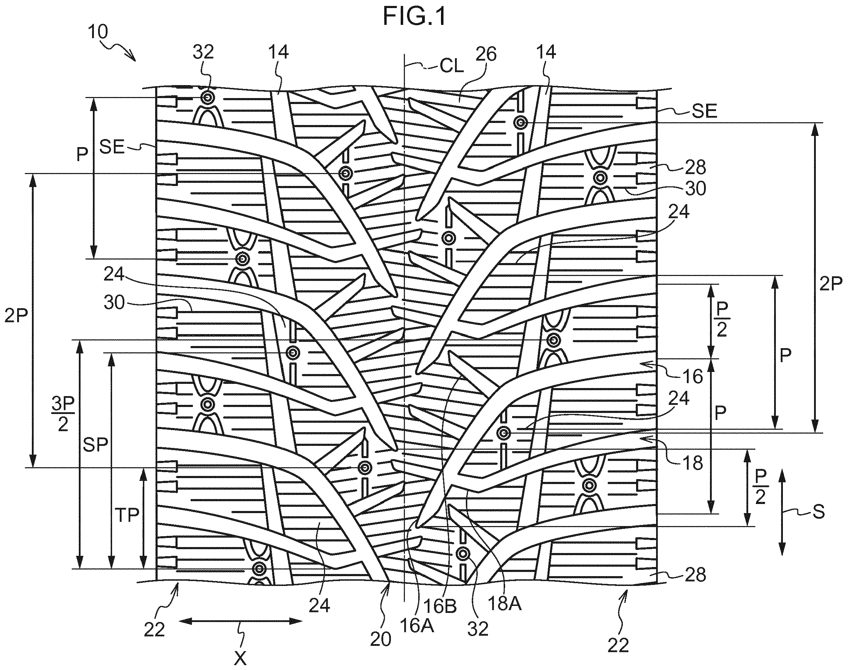

Explanation follows regarding an example of an exemplary embodiment of a studdable tire according to the present invention, with reference to Fig. 1 to Fig. 3B. Fig. 1 is an opened-out view illustrating a tread 12 of a studdable tire (hereafter simply referred to as "tire") 10 according to the present exemplary embodiment. Note that in Fig. 1, the arrow S indicates the tire circumferential direction, the lower side the drawing is the tread-in side during forward rotation of the tire, and the upper side of the drawing is the kick-off side during forward rotation of the tire. The arrow X indicates the tire width direction, and the reference numeral CL indicates the tire equatorial plane. In the present exemplary embodiment, the side running along the tire width direction nearest to the tire equatorial plane CL is referred to as "tire width direction inside", and the sides running along the tire width direction farthest from the tire equatorial plane CL are referred to as "tire width direction outsides". The reference numerals SE in Fig. 1 indicate ground contact edges of the tread 12. Note that "ground contact edges" referred to herein refers to tire width direction outside edges of a ground contact face when the tire 10 is fitted to a normal rim as defined in the JATMA YEAR BOOK (Japan Automobile Tire Manufacturers Association standards, 2013 edition), inflated to an internal pressure of 100% air pressure (maximum air pressure) corresponding to the maximum load capacity (load shown in bold in the internal pressure-load capacity correspondence table) for the applicable JATMA YEAR BOOK size/ply rating, and loaded to the maximum load capacity. In cases in which the location of use or manufacturing location falls under TRA standards or ETRTO standards, then the respective standards are adhered to.

As illustrated in Fig. 1, plural circumferential direction grooves 14 extending along the tire circumferential direction, and first lug grooves 16 and second lug grooves 18 serving as plural intersecting grooves that intersect the circumferential direction grooves 14, are formed in the surface (ground contact section) of the tread 12 of the tire 10. To explain in detail, in the present exemplary embodiment as an example, two circumferential direction grooves 14 are provided running along the tire circumferential direction in a zigzag shape on either tire width direction side of the tire equatorial plane CL. Thus, a central land portion 20, serving as a land portion, is formed between the pair of circumferential direction grooves 14, and shoulder land portions 22, serving as land portions at shoulder portion sides of the tread 12, are formed at the tire width direction outsides of the circumferential direction grooves 14.

The first lug grooves 16 are each formed in a circular arc shape extending from the respective ground contact edge SE toward the tire width direction inside and tread-in side at a specific pitch P along the tire circumferential direction, and each terminate at an end portion 16A at the tire width direction inside in the vicinity of the tire equatorial plane CL. Each first lug groove 16 intersects the respective circumferential direction groove 14 at an inflection point of the circumferential direction groove 14. Three shallow grooves 16B, configuring one set, are formed at a portion of the first lug groove 16 at the tire width direction inside of an intersection point between the first lug groove 16 and the circumferential direction groove 14. The shallow grooves 16B extend from the respective tire width direction outside and tread-in side toward the tire width direction inside and kick-off side, and terminate in the vicinity of the tire equatorial plane CL.

The second lug grooves 18 are formed at intervals along the tire circumferential direction at the same pitch P as the first lug grooves 16, and a ground contact edge SE side end portion of each second lug groove 18 and a ground contact edge SE side end portion of the respective first lug groove 16 are formed at intervals of half the pitch P in the tire circumferential direction (P/2). Although each second lug groove 18 is formed in a circular arc shape extending from the respective ground contact edge SE toward the tire width direction inside and tread-in side similarly to the first lug grooves 16, configuration of an end portion 18A at the tire width direction inside is different from the first lug grooves 16. Specifically, each second lug groove 18 bends toward the respective first lug groove 16 at a location further toward the tire width direction inside than the respective circumferential direction groove 14. The end portion 18A of the second lug groove 18 communicates with the first lug groove 16 at a position separated by a specific distance along the first lug groove 16 from the end portion 16A of the first lug groove 16.

The central land portion 20 and the shoulder land portions 22 are partitioned by the first lug grooves 16 and the second lug grooves 18 formed as described above. Specifically, plural central blocks 24 are formed in the central land portion 20 at the specific pitch P along the circumferential direction grooves 14 due to the central land portion 20 being partitioned by the first lug grooves 16 and the second lug grooves 18. A central rib 26 that runs continuously along the tire circumferential direction is formed in a tire width direction central portion of the central land portion 20. Plural shoulder blocks 28 are formed along the tire circumferential direction in the shoulder land portions 22 due to the shoulder land portions 22 being partitioned by the first lug grooves 16 and the second lug grooves 18. Note that the circumferential direction groove 14, first lug grooves 16, and second lug grooves 18 disposed on one side of the tire equatorial plane CL, and the circumferential direction groove 14, first lug grooves 16, second lug grooves 18 disposed on the other side of the tire equatorial plane CL are configured in a pattern with line symmetry in a phase offset by half the pitch P (P/2). In other words, the tread pattern of the tire 10 is set so as to have line symmetry in a phase offset by half the pitch P (P/2) on either side of the tire equatorial plane CL. The ground contact noise of the tread 12 is thereby suppressed from resonating.

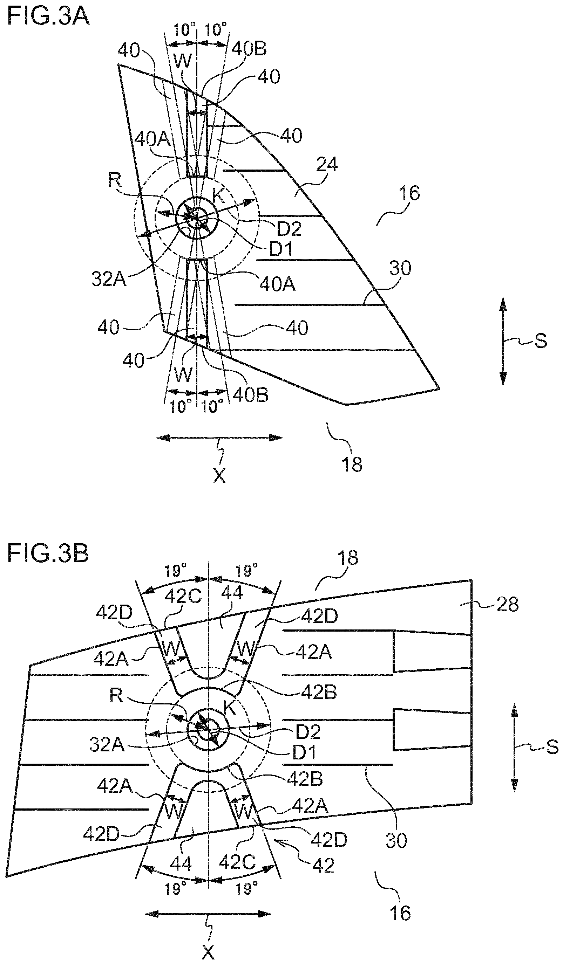

Plural sipes 30 are formed at specific intervals along the tire circumferential direction in a tread face side of the central blocks 24, the central rib 26, and the shoulder blocks 28, excluding regions K (see Fig. 3A and Fig. 3B) formed at the periphery of stud holes 32, serving as stud attachment portions, described below, and excluding portions formed with communicating grooves 40, 42 (see Fig. 3A and Fig. 3B), serving as communicating portions, described later. Note that, although the shape of the sipes 30 is set as a zigzag shape extending along the tire width direction, the sipes 30 are illustrated as straight lines in Fig. 1, Fig. 3A, and Fig. 3B in order to facilitate understanding of an interrelationship between the respective configuration elements.

Explanation follows regarding the stud holes 32 formed in plural locations of the central land portion 20 and the shoulder land portions 22. As an example, a placement pattern of the stud holes 32 is set with line symmetry in a phase offset by 1.5 times the pitch P (3P/2) on either side of the tire equatorial plane CL. Thus, explanation regarding the placement pattern of the stud holes 32 is only regarding the placement pattern of the stud holes 32 at one tire width direction side (a portion at the left side of the tire equatorial plane CLin Fig. 1).

First, explanation follows regarding the placement pattern of the stud holes 32 on the central land portion 20. The stud holes 32 formed on the central blocks 24 are disposed with one stud hole 32 on every other central block 24 from out of the central blocks 24 in a row along the tire circumferential direction. Each stud hole 32 formed on the central rib 26 is disposed between the shallow groove 16B formed farthest toward the kick-off side and the shallow groove 16B adjacent on the tread-in side to the shallow groove 16B formed farthest toward the kick-off side, from out of the set of three shallow grooves 16B formed on the respective first lug groove 16.

Explanation follows regarding the placement pattern of the stud holes 32 on each shoulder land portion 22. The stud holes 32 formed on the shoulder blocks 28 are disposed with one stud hole 32 on every other shoulder block 28 from out of the shoulder blocks 28 in a row along the tire circumferential direction.

More specifically, the stud holes 32 formed on the shoulder blocks 28 are disposed at the specific pitch P. In other words, setting is such that a distance in the tire circumferential direction from a first stud hole 32 to an Nth stud hole 32 is P(N-1), where the stud hole 32 disposed farthest toward the tread-in side is the first stud hole 32. The stud holes 32 formed on the central blocks 24 are set such that a distance in the tire circumferential direction from a first stud hole 32 to an Mth stud hole 32 is 2P(M-1), where the stud hole 32 disposed farthest toward the tread-in side is the first stud hole 32. Note that explanation of placement of the stud holes 32 formed in the central blocks 24 is made with reference to the right side of the tire equatorial plane CL in Fig. 1. The stud holes 32 formed on the central rib 26 are set such that a distance in the tire circumferential direction from a first stud hole 32 to an Lth stud hole 32 is 2P(L-1), where the stud hole 32 disposed farthest toward the tread-in side is the first stud hole 32. Note that a distance in the tire circumferential direction between the first stud hole 32 of the central blocks 24 and the first stud hole 32 of the shoulder blocks 28 is set so as to be SP (where 0 < S < 3). A distance in the tire circumferential direction between the first stud hole 32 of the central rib 26 and the first stud hole 32 of the shoulder blocks 28 is set so as to be TP (where 0 < T < 3).

By setting the interrelationship of the stud holes 32 in the tire circumferential direction as described above, the largest possible number of the stud holes 32 can be disposed in the shoulder blocks 28, which have the largest ground contact pressure out of the central blocks 24, the central rib 26, and the shoulder blocks 28. In other words, the placement of the stud holes 32 can be adjusted according to the ground contact pressure. The stud holes 32 can also be disposed at one tire width direction location out of the central blocks 24, the central rib 26, or the shoulder blocks 28. Note that the placement pattern is also set such that the stud holes 32 are not disposed in plural locations on the same circumferential direction line.

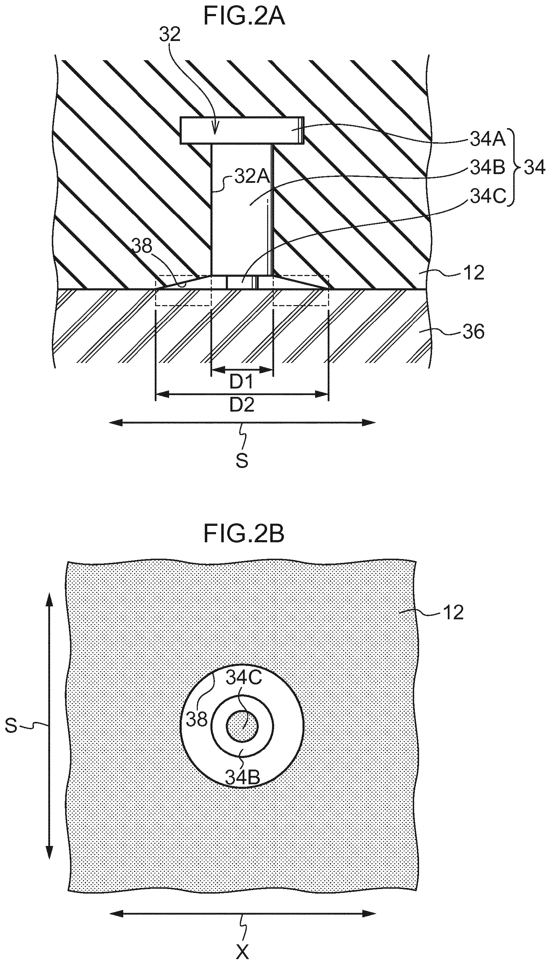

As illustrated in Fig. 2A and Fig. 2B, a spike pin 34 that is fitted in each stud hole 32 is configured including a circular plate shaped flange portion 34A, a circular column shaped shaft portion 34B, and a circular column shaped protruding portion 34C that has a smaller diameter than the shaft portion 34B. The stud hole 32 is formed in a shape into which the spike pin 34 is capable of being inserted, and one end portion of an insertion portion 32A into which the shaft portion 34B of the spike pin 34 is inserted is open at the surface of the tread 12. Note that the spike pin 34 is fitted into the stud hole 32 such that the protruding portion 34C contacts the ground.

As illustrated in Fig. 2A and Fig. 2B, when the tire 10 into which the spike pins 34 have been fitted contacts an icy road surface 36, a non-contact portion (low pressure portion) 38 is formed at the periphery of the protruding portion 34C of each spike pin 34. To explain specifically, the non-contact portion 38 is a circular truncated cone shaped space, with a circular shaped upper face with the same diameter as a diameter D1 of the insertion portion 32A of the stud hole 32, and a circular shaped lower face with a diameter D2 centered on a leading end of the protruding portion 34C. Note that the shape of the non-contact portion 38 depends on the diameter D1 of the insertion portion 32A of the stud hole 32. In the present exemplary embodiment as an example, the diameter D1 is set from 5mm to 7mm, in which case the diameter D2 of the lower face of the non-contact portion 38 is approximately 12mm.

Note that in the present exemplary embodiment, the communicating grooves 40 are formed at the periphery of the stud holes 32 provided in the central blocks 24 and the central rib 26, and the communicating grooves 42 are formed at the periphery of the stud holes 32 provided in the shoulder blocks 28. Namely, the communicating grooves 40 are applied to the central blocks 24 and the central rib 26 that have a relatively low ground contact pressure in the tread 12, and the communicating grooves 42 are applied to the shoulder blocks 28 that have a relatively high ground contact pressure in the tread 12. Detailed explanation follows regarding examples of the communicating grooves 40 and the communicating grooves 42, these being relevant portions of the present invention.

Fig. 3A illustrates an enlarged central block 24 formed with the stud hole 32. As illustrated in Fig. 3A, the communicating grooves 40 are respectively disposed with one communicating groove 40 each at the tread-in side and at the kick-off side of each stud hole 32, are each formed in a rectangular shape extending along the tire circumferential direction in plan view, and are disposed such that their width direction center line intersects an axial line of the insertion portion 32A of the stud hole 32. One end portion 40A of each communicating groove 40 terminates at a position in the circular shaped region K of radius R about the center of the insertion portion 32A in plan view, namely, at a position separated from the stud holes 32 by the distance R. Another end portion 40B of the communicating groove 40 is in communication with the respective first lug groove 16 or second lug groove 18. Specifically, from out of the other end portions 40B of the communicating grooves 40, the other end portion 40B of the communicating groove 40 disposed at the kick-off side of each stud hole 32 is in communication with the first lug groove 16, and the other end portion 40B of the communicating groove 40 disposed at the tread-in side of each stud hole 32 is in communication with the second lug groove 18.

In the communicating grooves 40 provided to the central rib 26, only a communication destination of the other end portions 40B is different from the communicating grooves 40 provided to the central blocks 24 as described above. Specifically, from out of the other end portions 40B of the communicating grooves 40 provided to the central rib 26, the other end portion 40B of the communicating groove 40 disposed at the kick-off side of each stud hole 32 is in communication with the shallow groove 16B formed farthest toward the kick-off side from out of the set of three shallow grooves 16B formed in the respective first lug groove 16. The other end portion 40B of the communicating groove 40 disposed at the tread-in side of each stud hole 32 is in communication with the shallow groove 16B adjacent to the shallow groove 16B formed farthest toward the kick-off side.

Fig. 3B illustrates an enlarged shoulder block 28 formed with the stud hole 32. As illustrated in Fig. 3B, the communicating grooves 42 are respectively formed at the tread-in side and the kick-off side of each stud hole 32, and have a shape that is set in a trapezoidal shape widening on progression from the stud hole 32 side toward the respective first lug groove 16 or second lug groove 18 side in plan view. Note that peripheral edges 42A at either tire width direction side of each communicating groove 42 are set so as to slope 19° toward the tire width direction outsides with respect to a straight line passing through the center of the stud hole 32 along the tire circumferential direction. Similarly to the communicating grooves 40, one end portion 42B of each communicating groove 42 terminates at a position in the circular shaped region K, namely, at a position separated from the stud hole 32 by the distance R. Another end portion 42C of each communicating groove 42 is in communication with the respective first lug groove 16 or second lug groove 18. Specifically, from out of the other end portions 42C of the communicating grooves 42, the other end portion 42C of the communicating groove 42 disposed at the kick-off side of each stud hole 32 is in communication with the respective second lug groove 18, and the other end portion 42C of the communicating groove 42 disposed at the tread-in side of each stud hole 32 is in communication with the respective first lug groove 16.

Each communicating groove 42 is provided with an island portion 44 formed in a trapezoidal shape that is slightly smaller than the respective communicating groove 42 in plan view, with an end portion at the stud hole 32 side that is chamfered in a circular arc shape forming a bulge toward the stud hole 32 side. The communicating groove 42 is thereby branched into two branched grooves 42D. In other words, two branched grooves 42D are respectively formed at the kick-off side and at the tread-in side of each stud hole 32. Note that in the present exemplary embodiment, a width W of the communicating grooves 40 and each branched groove 42D is set from approximately 1.5mm to 2.00mm, and a depth of the communicating grooves 40 and the branched grooves 42D (communicating grooves 42) is set to approximately 0.4mm. In the present exemplary embodiment, the radius R of the region K is set to 4mm. In other words, a thickness of from 0.5mm to 1.5mm is secured between the insertion portion 32A of the stud holes 32 set with the diameter D1 from 5mm to 7mm, and the one end portions of the communicating grooves 40, 42. Moreover, a diameter 2R of the region K is set so as to be shorter than the diameter D2 of the lower face of the non-contact portion 38, this being approximately 12mm.

Explanation follows regarding operation and advantageous effects of the present exemplary embodiment. In the present exemplary embodiment, the central land portion 20, the central rib 26, and the shoulder land portions 22 are partitioned by the plural circumferential direction grooves 14, the plural first lug grooves 16, and the plural second lug grooves 18 provided in the tread 12. The stud holes 32 are formed in the central land portion 20, the central rib 26, and the shoulder land portions 22. Thus, embedding the spike pins 34 in the respective stud holes 32 to increase friction force between the icy road surface 36 and the tire 10 when traveling on the icy road surface 36 enables steering stability performance on the icy road surface 36 to be secured.

However, in the present exemplary embodiment as described above, when the tire 10 fitted with the spike pins 34 contacts the icy road surface 36, the non-contact portions 38 are formed at the periphery of the protruding portions 34C of the respective spike pins 34. It is therefore conceivable that powdered ice scraped up by the spike pins 34 adheres to the non-contact portions 38 and is pressurized such that crystals develop in the powdered ice, the spike pins 34 are thereby impaired from penetrating the ice, and steering stability performance on the icy road surface 36 is reduced as a result.

However, in the present exemplary embodiment, the communicating grooves 40, 42 are provided in the central land portion 20, the central rib 26, and the shoulder land portions 22 in which the stud holes 32 are formed, and positions separated from the stud holes 32 by the distance R are placed in communication with the respective first lug grooves 16 and the second lug grooves 18 by the communicating grooves 40, 42. Thus, even if powdered ice scraped up by the spike pins 34 while driving or while braking adheres to the non-contact portions 38, the powdered ice is discharged from the non-contact portions 38 to the first lug grooves 16 and the second lug grooves 18 through the communicating grooves 40, 42.

To explain specifically, in the present exemplary embodiment, the one end portions 40A of the communicating grooves 40 and the one end portions 42B of the communicating grooves 42 terminate at positions in the circular shaped region K of radius R (4mm), while the diameter D2 of the lower faces of the non-contact portions 38 is approximately 12mm. The other end portions 40B of the communicating grooves 40 and the other end portions 42C of the communicating grooves 42 are in communication with the respective first lug grooves 16 and second lug grooves 18. Thus, the non-contact portions 38 are in a state in communication with the respective first lug grooves 16 and second lug grooves 18 when the tire 10 contacts the icy road surface 36. Powdered ice that has adhered to the non-contact portions 38 is pressed out into the first lug grooves 16 and the second lug grooves 18 due to relative displacement of the tread 12 and the icy road surface 36 while driving or while braking. Thus, the present exemplary embodiment enables powdered ice that has been scraped off by the spike pins 34 while driving or while braking to be suppressed from accumulating in the non-contact portions 38.

In the present exemplary embodiment, the communicating grooves 40, 42 are provided at either tire circumferential direction side of the stud holes 32. This enables powdered ice that has adhered to the non-contact portions 38 at the periphery of the spike pins 34 to be discharged to the lug grooves at the kick-off side of the stud holes 32 while the tire 10 is being driven, and enables the powdered ice to be discharged to the lugs grooves at the tread-in side of the stud holes 32 while the tire 10 is braking (while locked). To explain in detail, in the central blocks 24, powdered ice that has adhered to the non-contact portions 38 is discharged to the first lug grooves 16 at the kick-off side of the stud holes 32 while the tire 10 is being driven, and the powdered ice is discharged to the second lug grooves 18 at the tread-in side of the stud holes 32 while the tire 10 is braking. In the central rib 26, powdered ice that has adhered to the non-contact portions 38 is discharged to the shallow grooves 16B at the kick-off side of the stud holes 32 while the tire 10 is being driven, and the powdered ice is discharged to the shallow grooves 16B at the tread-in side of the stud holes 32 while the tire 10 is braking. In the shoulder blocks 28, powdered ice that has adhered to the non-contact portions 38 is discharged to the second lug grooves 18 at the kick-off side of the stud holes 32 while the tire 10 is being driven, and the powdered ice is discharged to the first lug grooves 16 at the tread-in side of the stud holes 32 while the tire 10 is braking.

In the present exemplary embodiment, the distance R from the one end portions of the communicating grooves 40, 42 to the stud holes 32 is set as the same distance on either tire circumferential direction side of the stud holes 32. This enables the same thickness to be secured between the stud holes 32 and the communicating grooves 40, 42 at the kick-off side of the stud holes 32, and between the stud holes 32 and the communicating grooves 40, 42 at the tread-in side of the stud holes 32. This enables a uniform rigidity to be secured at peripheral edges of the stud holes 32, and enables the ease of removal of the spike pins 34 from the ice to be improved. Namely, the present exemplary embodiment secures the rigidity of the peripheral edges of the stud holes 32, and thereby improves the ease of removal of the spike pins 34 from the ice.

In the present exemplary embodiment, the same number of communicating grooves 40, 42 are provided at either tire circumferential direction side of the stud holes 32. This enables powdered ice that has adhered to the non-contact portions 38 to be similarly discharged to the first lug grooves 16 and the second lug grooves 18 both while advancing and while reversing.

In the present exemplary embodiment, the width of the communicating grooves 40 provided to the central blocks 24 and the central rib 26 that are provided further toward the tire width direction inside than the shoulder blocks 28 is a narrower width than the width of the communicating grooves 42 provided to the shoulder blocks 28. Specifically, the two branched grooves 42D, each with the same width as the width of the communicating grooves 40, are respectively formed in the shoulder blocks 28 at both the tread-in side and the kick-off side of the stud holes 32, thereby enabling the total width of each communicating groove 40 to be set as half the total width of each communicating groove 42. This enables ground contact surface area to be secured at the central blocks 24 and the central rib 26 formed with the communicating grooves 40, namely, at portions with a lower ground contact pressure. This also enables the capacity of the communicating grooves 42 to be secured at the shoulder blocks 28 formed with the communicating grooves 42, namely, at portions with a higher ground contact pressure.

Note that in the present exemplary embodiment, the communicating grooves 40 are formed along the tire circumferential direction in plan view; however, as illustrated by the hypothetical lines in Fig. 3A, the communicating grooves 40 may be formed sloping at 10° clockwise or counterclockwise to the tire circumferential direction in plan view. This configuration is also effective for the communicating grooves 40 to discharge powdered ice from the non-contact portions 38. Moreover, the shape of the communicating grooves 40 may be configured so as to correspond to various tread patterns.

In the present exemplary embodiment, the island portion 44 is provided to each communicating groove 42; however, a configuration may be applied in which the island portions 44 are not provided, as long as sufficient rigidity can be obtained at the periphery of the communicating grooves 42. This enables a larger amount of powdered ice to be discharged by the communicating grooves 42.

In the present exemplary embodiment, a configuration is applied in which the same number of communicating grooves 40 are provided at the kick-off side of the stud holes 32 as at the tread-in side of the stud holes 32. However, a configuration may be applied in which different numbers of communicating grooves 40 are provided at the kick-off side of the stud holes 32 and at the tread-in side of the stud holes 32. This enables the placement of the communicating grooves 40 to be configured so as to correspond to the properties of the vehicle (such as drive force and weight).

In the present exemplary embodiment, the radius R of the region K is set at 4mm; however, the radius R may be changed as appropriate within a range in which the region K is contained within the non-contact portion 38 in plan view, and within a range enabling sufficient thickness to be secured between the insertion portion 32A of each stud hole 32 and the one end portions of the respective communicating grooves 40, 42.

### Test Examples

Samples of a studdable tire according to an example (Fig. 1) and a studdable tire according to a comparative example, namely, a studdable tire that was only different from the example in that the communicating grooves 40, 42 were not provided, were tested and evaluated with respect to braking performance. The results are shown in Table 1. The tire size of the studdable tires used in the test was 205/55R16, and the number of stud holes per tire was 130 for each tire.

For braking performance, a test vehicle driven at a constant speed of 20 km/h over an icy road surface was braked suddenly, the duration (braking duration) until the vehicle stopped was measured, and the reciprocal of the braking duration was indexed for evaluation. The braking performance index (index) in Table 1 shows an index with the braking duration of the comparative example set as 100. The larger the number, the shorter the braking time and the better the braking performance. A comparison of a coefficient of dynamic friction µ was also performed using the studdable tire according to the example and the studdable tire according to the comparative example.

The test results in Table 1 can confirm that the tire of the present invention has superior braking performance to that of the comparative example, and that the coefficient of dynamic friction µ is also better. Thus, it has been confirmed that, by providing communicating grooves at the periphery of the stud holes as illustrated in Fig. 1, powdered ice occurring while traveling on an icy road surface can be suppressed from adhering to the spike pins, and high steering stability performance can be secured.

An exemplary embodiment of the present invention has been explained above with reference to examples; however, the present exemplary embodiment is merely an example, and various modifications, such as modifications to the tread pattern, may be implemented within a range according to the scope of the appended claims.

The disclosure of Japanese Patent Application No. 2014-005942 filed January 16, 2014 is a priority document of the present specification.

**Table 1**

| | Comparative Example | Example |
|---|---|---|
| Braking Duration (Index) | 100 | 109 |
| *µ* | 0.206 | 0.225 |

## Claims

1. A studdable tire (10) comprising:
a plurality of land portions (20, 22) that are provided at a tread (12) and that are partitioned by a plurality of circumferential direction grooves (14) extending along a tire circumferential direction and a plurality of intersecting grooves (16, 18) that intersect the circumferential direction grooves (14);
a stud attachment portion (32) that is formed at the land portions (20, 22); and
a communicating portion (40, 42) that is provided at the land portions (20, 22) among the plurality of land portions (20, 22) at which the stud attachment portion (32) is formed, and that has one end portion (40A, 42B) terminating at a position separated from the stud attachment portion (32) and another end portion (40B, 42C) in communication with the intersecting grooves (16, 18), **characterised in that**:
a width of the communicating portion (40, 42) in the land portions (20, 22) further toward a tire width direction inner side than a shoulder portion of the tread (12) is narrower than a width of the communicating portion (40, 42) in the land portions (20, 22) at the shoulder portion.

2. The studdable tire (10) of claim 1, wherein the communicating portion (40, 42) is provided at both tire circumferential direction sides of the stud attachment portion.

3. The studdable tire (10) of claim 2, wherein a distance (R) from the one end portion (40A, 42B) of the communicating portion (40, 42) to the stud attachment portion (32) is set as the same distance at both tire circumferential direction sides of the stud attachment portion (32).

4. The studdable tire (10) of claim 2 or claim 3, wherein the same number of the communicating portions (40, 42) is provided at both tire circumferential direction sides of the stud attachment portion (32).

## Patentansprüche

1. Mit Spikes bestückbarer Reifen (10), umfassend:
eine Mehrzahl von Stegabschnitten (20, 22), welche auf einer Lauffläche (12) bereitgestellt sind und durch eine Mehrzahl von umfänglich gerichteten Rillen (14) unterteilt sind, welche sich entlang einer Reifenumfangsrichtung erstrecken und eine Mehrzahl von sich schneidenden Rillen (16, 18), welche die umfänglich gerichteten Rillen (14) schneiden;
einen Spike-Befestigungsabschnitt (32), welcher an den Stegabschnitten (20, 22) gebildet ist; und
einen Kommunikationsabschnitt (40, 42), welcher an den Stegabschnitten (20, 22) unter der Mehrzahl von Stegabschnitten (20, 22) bereitgestellt ist, an welchem der Spike-Befestigungsabschnitt (32) gebildet ist, und welcher einen Endabschnitt (40A, 42B) aufweist, welcher in einer Position endet, welche vom Spike-Befestigungsabschnitt (32) und einem anderen Endabschnitt (40B, 42C) getrennt ist, welcher mit den sich schneidenden Rillen (16, 18) kommuniziert, **dadurch gekennzeichnet, dass**:
eine Breite des Kommunikationsabschnitts (40, 42) in den Stegabschnitten (20, 22), welcher weiter zu einer Innenseite hin in der Reifenbreitenrichtung als ein Schulterabschnitt der Lauffläche (12) liegt, schmaler als eine Breite des Kommunikationsabschnitts (40, 42) in den Stegabschnitten (20, 22) am Schulterabschnitt ist.

2. Mit Spikes bestückbarer Reifen (10) nach Anspruch 1, wobei der Kommunikationsabschnitt (40, 42) auf beiden Seiten in der Reifenumfangsrichtung des Spike-Befestigungsabschnitts bereitgestellt ist.

3. Mit Spikes bestückbarer Reifen (10) nach Anspruch 2, wobei ein Abstand (R) von dem einen Endabschnitt (40A, 42B) des Kommunikationsabschnitts (40, 42) zum Spike-Befestigungsabschnitt (32) so eingestellt ist, dass er dem selben Abstand auf beiden Seiten in der Reifenumfangsrichtung des Spike-Befestigungsabschnitts (32) entspricht.

4. Mit Spikes bestückbarer Reifen (10) nach Anspruch 2 oder 3, wobei die selbe Anzahl von Kommunikationsabschnitten (40, 42) auf beiden Seiten in der Reifenumfangsrichtung des Spike-Befestigungsabschnitts (32) bereitgestellt ist.

## Revendications

1. Bandage pneumatique à clouter (10), comprenant :
plusieurs parties d'appui (20, 22) agencées au niveau d'une bande de roulement (12) et divisées par plusieurs rainures à direction circonférentielle (14) s'étendant le long d'une direction circonférentielle du bandage pneumatique, et plusieurs rainures d'intersection (16, 18) coupant les rainures à direction circonférentielle (14) ;
une partie de fixation des clous (32) formée au niveau des parties d'appui (20, 22) ; et
une partie de communication (40, 42) agencée au niveau des parties d'appui (20, 22) parmi les plusieurs parties d'appui (20, 22) au niveau desquelles la partie de fixation des clous (32) est formée, et comportant une partie d'extrémité (40A, 42B) se terminant au niveau d'une position séparée de la partie de fixation des clous (32), et une autre partie d'extrémité (40B, 42C) en communication avec les rainures d'intersection (16, 18) ; **caractérisé en ce que** :
une largeur de la partie de communication (40, 42) dans les parties d'appui (20, 22) agencée davantage vers un côté interne, dans la direction de la largeur du bandage pneumatique, qu'une partie d'épaulement de la bande de roulement (12), est plus étroite qu'une largeur de la partie de communication (40, 42) dans les parties d'appui (20, 22) au niveau de la partie d'épaulement.

2. Bandage pneumatique à clouter (10) selon la revendication 1, dans lequel la partie de communication (40, 42) est agencée au niveau des deux côtés, dans la direction circonférentielle du bandage pneumatique, de la partie de fixation des clous.

3. Bandage pneumatique à clouter (10) selon la revendication 2, dans lequel une distance (R) entre ladite une partie d'extrémité (40A, 42B) de la partie de communication (40, 42) et la partie de fixation des clous (32) est ajustée de sorte à être égale au niveau des deux côtés, dans la direction circonférentielle du bandage pneumatique, de la partie de fixation des clous (32).

4. Bandage pneumatique à clouter (10) selon les revendications 2 ou 3, dans lequel le même nombre des parties de communication (40, 42) est agencé au niveau des deux côtés, dans la direction circonférentielle du bandage pneumatique, de la partie de fixation des clous (32).
